# EUROPEAN PATENT APPLICATION

(11) **EP 4 807 210 A1**
(43) Date of publication of application: **16.09.2026**
(21) Application number: 23958199.4
(22) Date of filing: 06.11.2023
(51) Int. Cl.: F16F 9/56

(54) **SUSPENSION DEVICE**

(71) Applicant: Astemo, Ltd., Chiyoda-ku, Tokyo 1000004 (JP)
(72) Inventor: FUJIKAWA, Yosuke, Hitachinaka-shi, Ibaraki 312-8503 (JP)
(74) Representative: Nordmeyer, Philipp Werner
(86) International application number: PCT/JP2023/039823
(87) International publication number: WO 2025/099792

(57) **Abstract**

A suspension device (10) comprises: a damper tube (40) that has the inside filled with oil; a piston (33) that partitions the inside of the damper tube (40) into two chambers and generates damping force by moving in the axis direction; a spring (34) that, when the piston (33) is displaced in one direction, adds biasing force so as to bring the same back to the original position; an adjustment mechanism (50) that is capable of compressing the spring (34) and that adjusts the length of the spring (34) to an arbitrary defined length; and a reservoir (15) that reserves excessive oil. The adjustment mechanism (50) includes: a pump unit (60) for sending the oil; and a jack (70) to which the oil is fed from the reservoir (15) by the pump unit (60) and which compresses the spring (34). The reservoir (15) and the pump unit (60) are integrally provided to the damper tube (40).

## Description

### TECHNICAL FIELD

The present invention relates to a suspension device.

### BACKGROUND ART

For example, in a saddle-ride type vehicle, a suspension device is installed from a wheel to a vehicle body in order to damp vibration or the like received from a road surface. Patent Literature 1 discloses a technique related to a suspension device in the related art.

The suspension device as disclosed in Patent Literature 1 includes a damper tube filled with oil, a spring that applies a biasing force to bring a piston back to an original position when the piston is displaced, a pump unit that can compress the spring, and a reservoir that stores excess oil.

By adjusting a compression amount of the spring, it is possible to adjust a height of a seat on which a rider straddles and the riding comfort.

### CITATION LIST

### PATENT LITERATURE

Patent Literature 1: JP6873355B

### SUMMARY OF INVENTION

### TECHNICAL PROBLEM

In general, a large number of devices and components are mounted in a limited space in saddle-ride type vehicles. If the suspension device can be made smaller, it is preferable as it increases the degree of freedom in mounting other devices.

An object of the present invention is to provide a small suspension device.

### SOLUTION TO PROBLEM

As a result of intensive studies, the present inventors have found that the suspension device can be made smaller by integrating the reservoir and pump unit with the damper tube. The present invention was completed based on these findings.

Hereinafter, the present disclosure will be described.

According to the present disclosure, there is provided a suspension device including:
a damper tube filled with oil;
a piston configured to divide the inside of the damper tube into two chambers and move in an axial direction to generate a damping force;
a spring configured to apply a biasing force to bring the piston back to an original position when the piston is displaced in one direction;
an adjustment mechanism capable of compressing the spring and configured to adjust a length of the spring to any length; and
a reservoir configured to store excess oil, in which
the adjustment mechanism includes a pump unit that pumps oil and a jack that compresses the spring when oil is pumped from the reservoir by the pump unit, and
the reservoir and the pump unit are integrally provided on the damper tube.

### ADVANTAGEOUS EFFECTS OF INVENTION

According to the present invention, a small suspension device can be provided.

### BRIEF DESCRIPTION OF DRAWINGS

[Fig. 1] Fig. 1 is a perspective view of a suspension device according to an embodiment of the present invention.
[Fig. 2] Fig. 2 is a diagram schematically illustrating the suspension device illustrated in Fig. 1.
[Fig. 3] Fig. 3 is a cross-sectional view of a main part of the suspension device illustrated in Fig. 1.
[Fig. 4] Fig. 4 is a plan view of the suspension device illustrated in Fig. 1.
[Fig. 5] Fig. 5 is a cross-sectional view taken along a line 5-5 in Fig. 3.
[Fig. 6] Fig. 6 is a perspective view illustrating a state in which a reservoir and a pump unit are removed from a cap member illustrated in Fig. 1.

### DESCRIPTION OF EMBODIMENTS

An embodiment of the present invention will be described below with reference to the accompanying drawings. In the description, left and right refer to the left and right with respect to a rider of a saddle-ride type vehicle, and front and rear refer to the front and rear with respect to a traveling direction of the saddle-ride type vehicle. In the drawings, Fr indicates the front, Rr indicates the rear, Le indicates the left as seen from the rider, Ri indicates the right as seen from the rider, Up indicates the up, and Dn indicates the down. The embodiment illustrated in the accompanying drawings is an example of the present invention, and the present invention is not limited to this embodiment.

### <Embodiment>

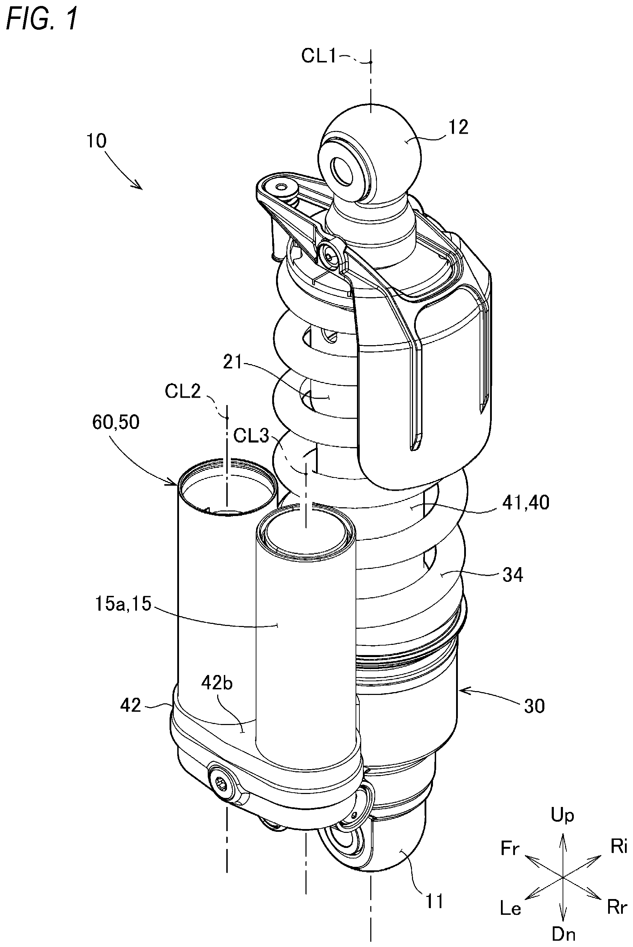

Reference is made to Fig. 1. A suspension device 10 is, for example, a rear cushion to be mounted on a two-wheeled vehicle as a saddle-ride type vehicle. Hereinafter, the suspension device 10 may be referred to as a rear cushion 10. The rear cushion 10 is used in such a manner that a lower end connecting portion 11 provided at a lower end is connected to a rear wheel and an upper end connecting portion 12 provided at an upper end is connected to a vehicle body.

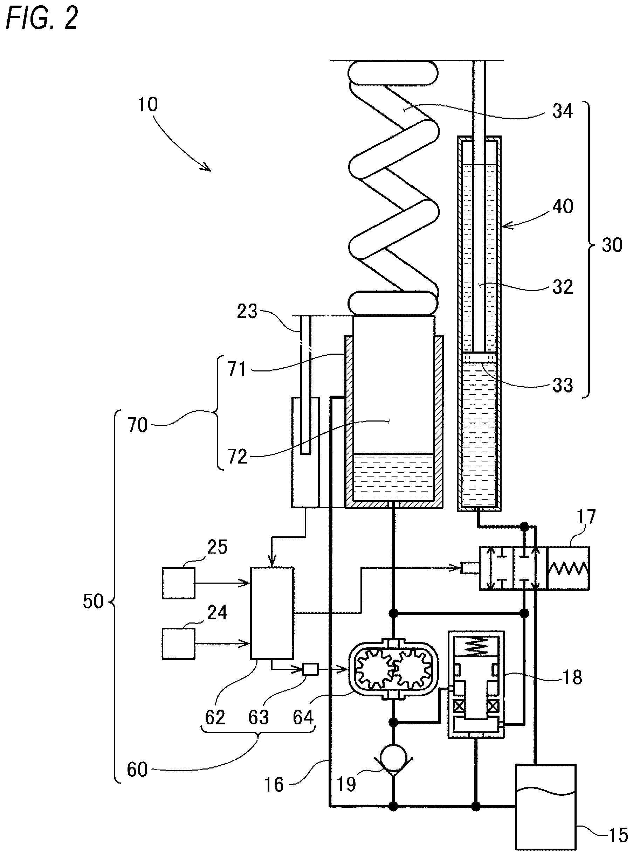

Reference is made to Fig. 2. The rear cushion 10 includes, as main components, a damping unit 30 that damps vibration energy input from a road surface, an adjustment mechanism 50 that can adjust a height of the vehicle body and/or the riding comfort, and a reservoir 15 through which excess oil in the damping unit 30 and the adjustment mechanism 50 is drained.

The damping unit 30, the adjustment mechanism 50, and the reservoir 15 are connected by a flow path 16 through which oil can pass.

The rear cushion 10 further includes a solenoid valve 17 that opens and closes the flow path 16 through which oil passes from the adjustment mechanism 50 to the reservoir 15, a pilot valve 18 that allows oil to flow when the flow path 16 through which oil passes from the adjustment mechanism 50 to the reservoir 15 is closed, and a check valve 19 that allows oil to flow in one direction from the reservoir 15 to a pump unit 60.

The damping unit 30 includes a damper tube 40 filled with oil, a rod 32 having a tip inserted into the damper tube 40 and movable along an axis CL1 (see Fig. 1), a piston 33 that is provided at the tip of the rod 32 and moves together with the rod 32 to generate a damping force, and a spring 34 that applies a biasing force to return the piston 33 downward when the piston 33 moves toward an upper end of the damper tube 40.

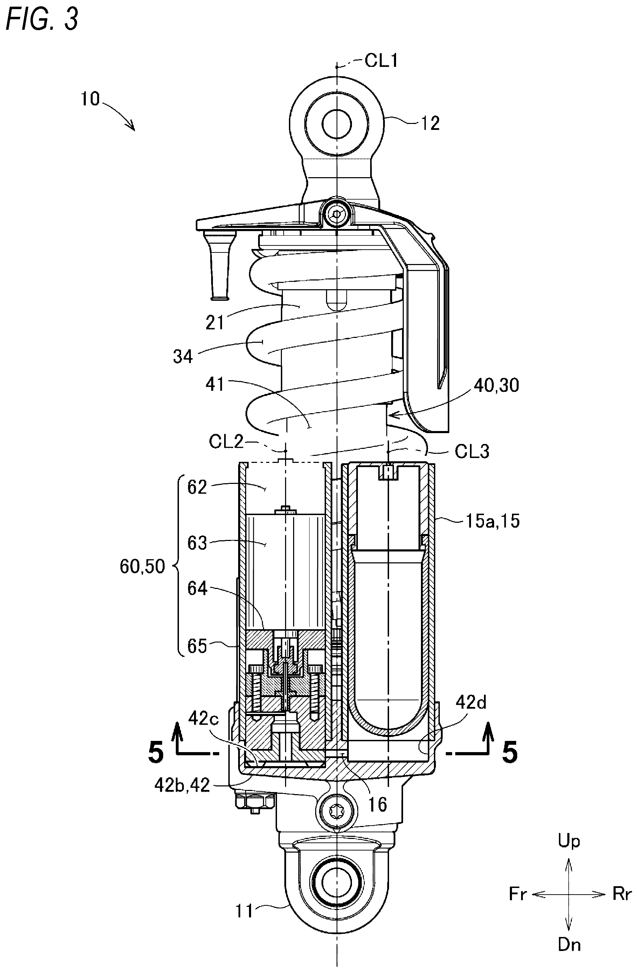

Reference is made to Fig. 3. The damper tube 40 includes a cylindrical cylinder 41 surrounded by the spring 34, and a cap member 42 that closes a lower end of the cylinder 41 and supports the adjustment mechanism 50 and the reservoir 15. An upper end of the cylinder 41 is closed by an other-end lid (not illustrated).

The upper end of the cylinder 41 is surrounded by a bottomed cylindrical member 21 having a bottomed cylindrical shape. The bottomed cylindrical member 21 is provided to be slidable with respect to the damper tube 40, and supports the rod 32 (see Fig. 2).

In the damper tube 40, the upper end of the cylinder 41 may be covered by the cap member 42. In this case, the lower end of the cylinder 41 is covered by an other-end lid. In other words, one end of the cylinder 41 is covered by the cap member 42, and the reservoir 15 and at least a part of the adjustment mechanism 50 are supported by the cap member 42. The other end of the cylinder 41 is covered by an other-end lid through which the rod 32 (see Fig. 2) passes.

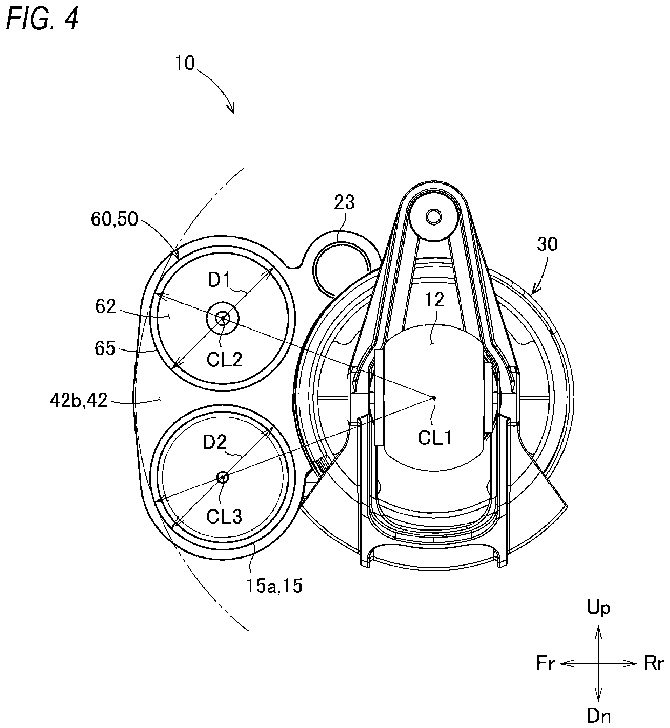

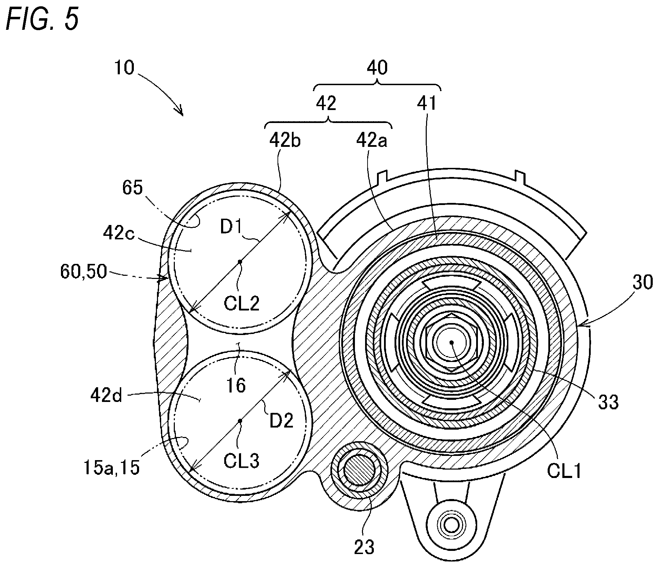

Reference is made to Figs. 4 and 5. In the cap member 42, a first portion 42a closing one end of the cylinder 41 and a second portion 42b protruding from the first portion 42a in a radial direction of the cylinder 41 are integrally formed.

A part of the flow path 16 is formed in a groove shape in a portion of the second portion 42b connecting the reservoir 15 and the adjustment mechanism 50.

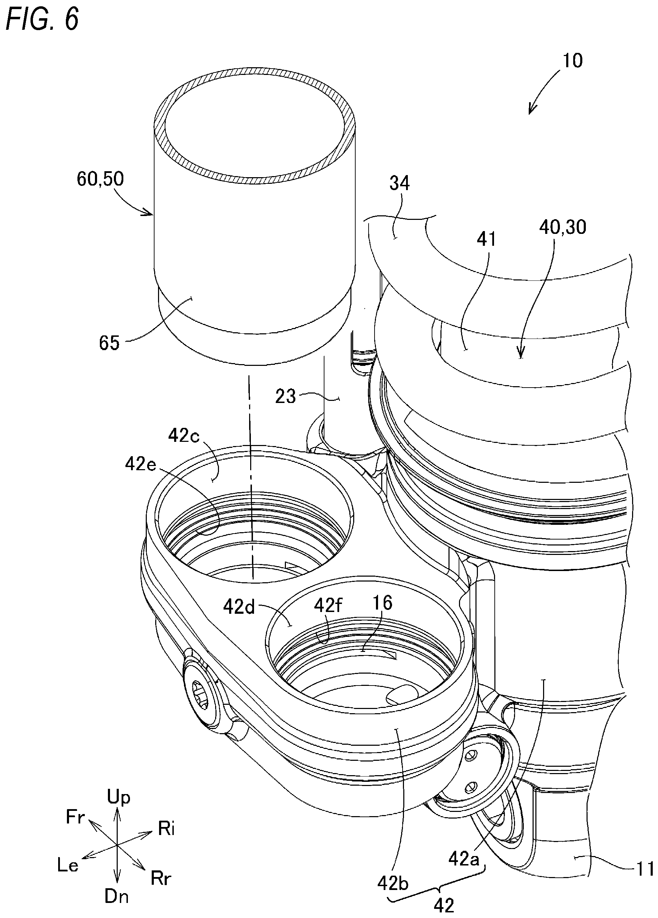

Reference is made to Fig. 6. Recesses 42c and 42d each formed in a cylindrical and recessed shape are formed in the second portion 42b. Female threads are formed on inner peripheral surfaces of the recesses 42c and 42d. The female-threaded portions may be referred to as rotation positioning portions 42e and 42f that determine positions the adjustment mechanism 50 and the reservoir 15 (see Fig. 3), respectively.

Reference is also made to Fig. 5. Lengths from the axis CL1 of the cylinder 41 to the recesses 42c and 42d are the same. Inner diameters of the recesses 42c and 42d are the same, or the inner diameter of the recess 42d to which the reservoir 15 is attached is larger than the inner diameter of the recess 42c to which the adjustment mechanism 50 is attached.

Reference is made to Fig. 3. The spring 34 is constituted by a compression coil spring, a lower end of which biases the cap member 42 downward, and an upper end of which biases the bottomed cylindrical member 21 upward.

Reference is made to Fig. 2. The adjustment mechanism 50 includes the pump unit 60 that can pump oil, and a jack 70 that compresses the spring 34 when oil is pumped from the pump unit 60.

The pump unit 60 includes a control unit 62 that supplies electricity based on information or the like from outside, a drive unit 63 that is operated by the control unit 62, and a pump 64 that pumps oil when the drive unit 63 is operated.

Reference is made to Fig. 3. The pump unit 60 includes a cylindrical pump unit housing 65 fastened to the recess 42c. An axis CL2 of the pump unit housing 65 extends substantially parallel to the axis CL1 of the cylinder 41. The pump 64, the drive unit 63, and the control unit 62 are housed in the pump unit housing 65 in this order from a portion close to the cap member 42.

The control unit 62 includes, for example, a CPU, a ROM in which programs executed by the CPU, various data, and the like are stored, and a RAM used as a working memory for the CPU.

Reference is made to Fig. 2. Electric signals from, for example, a height sensor 23 that detects the compression amount of the spring 34, a vehicle speed sensor 24 that detects a vehicle speed of the two-wheeled vehicle, and an operation switch 25 that can be operated by the rider are transmitted to the control unit 62. Based on the information from the height sensor 23, the vehicle speed sensor 24, and the operation switch 25, the control unit 62 energizes the drive unit 63, the solenoid valve 17, and the like.

In addition to these sensors, information from necessary sensors or the like can be input to the control unit 62 as an electric signal.

The drive unit 63 is constituted by, for example, an electric motor known in the related art.

The pump 64 is constituted by, for example, an oil pump known in the related art.

The jack 70 includes a jack housing 71 filled with the oil pumped from the pump 64, and a jack body 72 that compresses the spring 34 against the biasing force of the spring 34 when the oil is pumped to the jack housing 71.

Reference is made to Fig. 3. The reservoir 15 is constituted by, for example, a bladder. The reservoir 15 has a substantially cylindrical reservoir housing 15a fastened to the recess 42d. An axis CL3 of the reservoir housing 15a extends substantially parallel to the axis CL1 of the cylinder 41.

Reference is also made to Fig. 5. A diameter D1 of the pump unit housing 65 is slightly smaller than the inner diameter of the recess 42c. A diameter D2 of the reservoir housing 15a is slightly smaller than the inner diameter of the recess 42d. The diameter D1 of the pump unit housing 65 is substantially the same as or smaller than the diameter D2 of the reservoir housing 15a.

The suspension device 10 described above will be summarized below.

Reference is made to Fig. 2. First, the suspension device 10 includes a damper tube 40 filled with oil, a piston 33 that divides the inside of the damper tube 40 into two chambers and moves in an axial direction to generate a damping force, a spring 34 that applies a biasing force to bring the piston 33 back to an original position when the piston 33 is displaced in one direction, an adjustment mechanism 50 that can compress the spring 34 and adjusts a length of the spring 34 to any length, and a reservoir 15 that stores excess oil.

The adjustment mechanism 50 includes a pump unit 60 for pumping oil, and a jack 70 that compresses the spring 34 when oil is pumped from the reservoir 15 by the pump unit 60.

Reference is made to Fig. 1. The reservoir 15 and the pump unit 60 are integrally provided on the damper tube 40.

By providing the reservoir 15 and the pump unit 60 integrally with the damper tube 40, the pump unit 60 and the damper tube 40 can share the reservoir 15. Accordingly, the suspension device 10 can be made smaller as compared with a case where another reservoir is provided for the pump unit 60.

Secondly, in the suspension device 10 according to the first, the damper tube 40 includes a cylinder 41 formed of a substantially cylindrical body, and a cap member 42 that closes one end of the cylinder 41.

Reference is made to Fig. 5. In addition, the cap member 42 is formed with a part of a flow path 16 that connects the reservoir 15, the jack 70 (see Fig. 2), and the pump unit 60 and through which the oil can pass. By forming a part of the flow path 16 with the cap member 42, it is not necessary to use a hose for flowing oil. The suspension device 10 can be made smaller by the space required for arranging the hose, and the number of components can be reduced.

Thirdly, in the suspension device 10 according to the second, the cap member 42 includes a first portion 42a closing one end of the cylinder 41, and a second portion 42b protruding from the first portion 42a in a radial direction of the cylinder 41. A portion of the flow path 16 connecting the reservoir 15 and the pump unit 60 is formed in a groove shape in the second portion 42b. By forming the flow path 16 in a groove shape, the weight of the cap member 42 can be reduced, and the weight of the entire suspension device 10 can also be reduced.

Reference is made to Fig. 3. Fourth, in the suspension device 10 according to any one of the first to third, the reservoir 15 includes a reservoir housing 15a that is long along the axial direction of the cylinder 41, and the pump unit 60 includes a pump unit housing 65 that is long along the axial direction of the cylinder 41. In the pump unit housing 65, a drive unit 63 as a drive source and a pump 64 that pumps oil when driven by the drive unit 63 are arranged side by side in a longitudinal direction. The reservoir 15 and the pump unit 60 are arranged side by side in the radial direction of the cylinder 41. The reservoir 15 and the pump unit 60 can be arranged more compactly.

Reference is made to Fig. 5. Fifthly, in the suspension device 10 according to the fourth, a diameter D1 of the pump unit housing 65 is equal to or smaller than a diameter D2 of the reservoir housing 15a. In the related art, the reservoir 15 has been arranged on a peripheral edge of the damper tube 40. By setting the diameter of the pump unit housing 65 equal to or smaller than the diameter of the reservoir housing 15a, the pump unit housing 65 can be arranged inside a circle having a radius from the axis CL1 of the damper tube 40 to an outer surface of the reservoir housing 15a. The suspension device 10 can be made even smaller.

Reference is made to Fig. 3. Sixth, in the suspension device 10 according to any one of the second to fifth, the pump unit 60 includes a pump unit housing 65 that is long along the axial direction of the cylinder 41.

Reference is made to Fig. 6. The pump unit housing 65 is inserted into a recess 42c formed in a recessed shape in the cap member 42. A rotation positioning portion 42e that determines a position of the pump unit housing 65 is formed in the recess 42c.

Reference is made to Fig. 3. Seventh, in the suspension device 10 according to any one of the second to sixth, the pump unit 60 includes the pump unit housing 65 that is long along the axial direction of the cylinder 41, the drive unit 63 as a drive source, the pump 64 that pumps oil when driven by the drive unit 63, and a control unit 62 that outputs a signal to control the drive unit. In the pump unit housing 65, the pump 64, the drive unit 63, and the control unit 62 are arranged in this order from a portion close to the cap member 42.

The suspension device 10 according to the present invention has been described using a rear cushion of a two-wheeled vehicle as an example, but the suspension device 10 may be a front fork. The saddle-ride type vehicle may be a three-wheeled vehicle or a four-wheeled vehicle in addition to the two-wheeled vehicle as long as a rider straddles the vehicle.

The present invention is not limited to the examples as long as operations and effects of the present invention are exhibited.

### INDUSTRIAL APPLICABILITY

The suspension device of the present invention is suitable for a rear cushion of a two-wheeled vehicle.

### REFERENCE SIGNS LIST

10 rear cushion (suspension device)
15 reservoir
15a reservoir housing
16 flow path
33 piston
34 spring
40 damper tube
41 cylinder
42 cap member
42a first portion
42b second portion
42c recess
42e rotation positioning portion
50 adjustment mechanism
60 pump unit
62 control unit
63 drive unit
64 pump
65 pump unit housing
70 jack
D1 diameter of pump unit housing 65
D2 diameter of reservoir housing 15a

## Claims

1. A suspension device comprising:
a damper tube filled with oil;
a piston configured to divide the inside of the damper tube into two chambers and move in an axial direction to generate a damping force;
a spring configured to apply a biasing force to bring the piston back to an original position when the piston is displaced in one direction;
an adjustment mechanism capable of compressing the spring and configured to adjust a length of the spring to any length; and
a reservoir configured to store excess oil, wherein
the adjustment mechanism includes a pump unit that pumps oil and a jack that compresses the spring when oil is pumped from the reservoir by the pump unit, and
the reservoir and the pump unit are integrally provided on the damper tube.

2. The suspension device according to claim 1, wherein
the damper tube includes a cylinder formed of a substantially cylindrical body and a cap member that closes one end of the cylinder, and
the cap member is formed with a part of a flow path that connects the reservoir, the jack, and the pump unit and through which oil can pass.

3. The suspension device according to claim 2, wherein
the cap member includes a first portion closing one end of the cylinder and a second portion protruding from the first portion in a radial direction of the cylinder, and
a portion of the flow path connecting the reservoir and the pump unit is formed in a groove shape in the second portion.

4. The suspension device according to claim 1, wherein
the reservoir includes a reservoir housing that is long along an axial direction of the cylinder,
the pump unit includes a pump unit housing that is long along the axial direction of the cylinder,
a drive unit as a drive source and a pump that pumps oil when driven by the drive unit are arranged side by side in a longitudinal direction in the pump unit housing, and
the reservoir and the pump unit are arranged side by side in a radial direction of the cylinder.

5. The suspension device according to claim 4, wherein
a diameter of the pump unit housing is equal to or smaller than a diameter of the reservoir housing.

6. The suspension device according to claim 2, wherein
the pump unit includes a pump unit housing that is long along an axial direction of the cylinder,
the pump unit housing is inserted into a recess formed in a recessed shape in the cap member, and
a rotation positioning portion that determines a position of the pump unit housing is formed in the recess.

7. The suspension device according to claim 2, wherein
the pump unit includes a pump unit housing that is long along an axial direction of the cylinder, a drive unit as a drive source, a pump that pumps oil when driven by the drive unit, and a control unit that outputs a signal to control the drive unit, and
in the pump unit housing, the pump, the drive unit, and the control unit are arranged in this order from a portion close to the cap member.
